# EUROPEAN PATENT APPLICATION

(11) **EP 1 361 000 A2**
(43) Date of publication of application: **12.11.2003**
(21) Application number: 03076352.8
(22) Date of filing: 07.05.2003
(51) Int. Cl.: B07C 5/36

(54) **Sorting apparatus with product carriers having two halves**

(30) Priority: 08.05.2002 EP 02076770
(71) Applicant: FPS Food Processing Systems B.V., 2631 RE Nootdorp (NL)
(72) Inventor: van Wijngaarden, Erik, 7558 WL Hengelo (NL); van den Berg, Wouter, 2272 HA Voorburg (NL)
(74) Representative: Prins, Adrianus Willem

(57) **Abstract**

The present invention relates to an apparatus for sorting products (P) such as fruits, comprising an endless conveyor with product carriers (1a,1b) which are connected to the conveyor with the aid of holders (2) and which are positioned at predetermined intermediate distances along the conveyor, for conveying the products in a transport direction, wherein the product carriers can assume two positions, viz. a conveying position for conveying the products to discharge paths, and a releasing position for releasing products adjacent a desired discharge path, as well as operating means (3) for operation of the product carriers (1a,1b) for switching from conveying position to releasing position, and vice versa, and is characterized in that the operating means at said operation impart to the products a downward initial velocity in a substantially vertical plane through said transport direction.

For this purpose, suitably, an apparatus for delivering such products is utilized, having a lug-pawl combination such that a short switching time is obtained. Thus, the need for higher processing rates can be met with advantage.

## Description

The present invention relates to an apparatus and method for sorting products, such as fruits, more particularly as described in the preamble of claims 1 and 11.

Such an apparatus is mentioned, for instance, in US 4,586,613, where reference is made *inter alia* to an apparatus with product carriers consisting of two halves that can be swung down away from each other, so that the supported products fall from between the halves so as to be captured and discharged along discharge paths.

Such ways of delivery are characterized in that the products at the time of delivery possess a velocity equal to the transport velocity, which is augmented during the fall by the fall velocity. For such a fall trajectory, the downward initial speed will generally be 0 m/s. Specifically this initial condition is determinative of the capture position and total fall time of a released product. More specifically, this can mean that the fall trajectory can comprise a proportionally long horizontal trajectory portion. In case products are to be delivered that are small, are conveyed in closely consecutive product carriers, and in certain cases still posses stems, and sometimes leaves, these products may become mutually entangled during their fall along these trajectories. Correct sorting is then no longer possible.

To resolve this shortcoming, the apparatus according to the present invention is characterized in that the operating means at operation impart to the products a downward initial velocity in a substantially vertical plane through the direction of transport.

What is thus achieved advantageously is that, more than just avoiding entanglement, the fall times become considerably shorter, and hence the sorting time is shortened. In particular for sorting very large amounts of small fruits, such as cherries or cherry tomatoes, this feature yields a corresponding economic advantage.

Further, the invention relates to an apparatus for delivering products according to the preamble of claim 10.

Such an apparatus is generally known in sorting machines in which the products, for instance with grippers, are carried along to discharge paths where, through unlocking of the grippers, they are released to fall. In particular, the grippers are moved away from each other, mostly against the tension of a tension spring, so that the products are released to start their fall.

In the case where many, and in particular small, products are to be sorted, it has been found that such delivery mechanisms fail. More particularly, the delivery times and fall times are too long in proportion to the time it takes to traverse the sorting path.

In order to make an improvement in this regard, the present invention provides an apparatus characterized in that the locking means constitute a mechanical switch of a short, substantially instantaneous, switching time, and that the apparatus further comprises biasing means which at delivery impart to the parts mentioned, and hence to the products, an initial velocity v > 0 m/s substantially in the direction of fall.

Further details of the invention will be elucidated hereinafter with reference to a drawing, in which
Fig. 1 is a perspective top plan view of a product carrier, and
Fig. 2 is a perspective bottom view of the carrier.

Corresponding parts in the two figures have the same numerals.

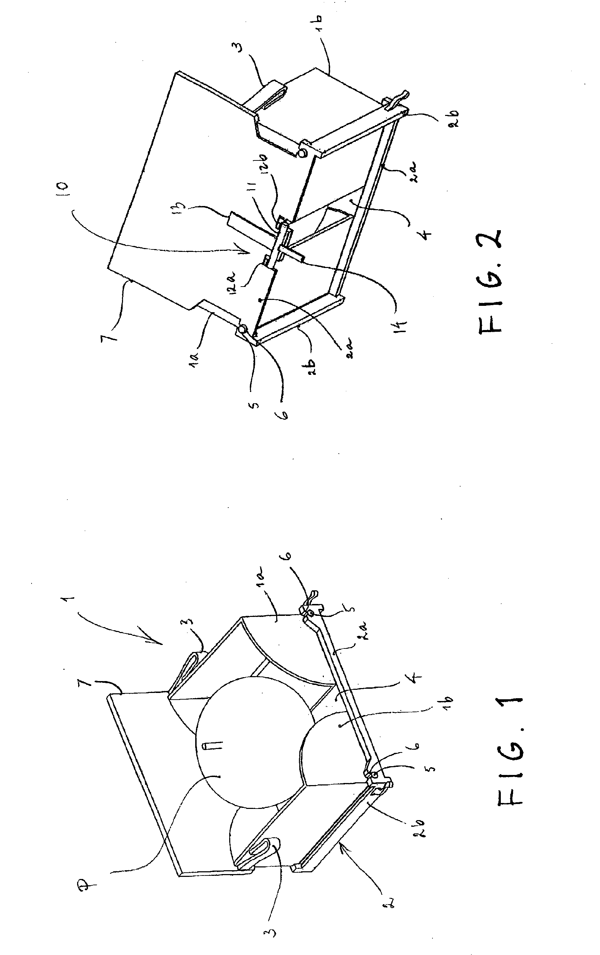

In Fig. 1, a product carrier 1 is represented, intended for conveying products P along a transport path to discharge paths. The product carrier is designed as a cup, more particularly as a cup built up from two cup halves 1a, 1b. The halves are mounted in a holder 2. In the figure, it is clearly indicated that in the present exemplary embodiment the holder and the bottom parts of the cup halves are rectangular in shape and are a mutual fit. The rectangle of the holder 2 has two long bottom edges 2a, and two short bottom edges 2b. The cup halves are pivotally mounted by way of pivots 5 along the short edges 2b in pivot holes 6 situated at the two ends of the long edges 2a.

The transport path as mentioned above generally involves a chain conveyor, with two endless chains and, arranged transversely between these, generally rods or pins for mounting such rows of cups, these rows being envisaged parallel to the chains and to the transport direction. It is also possible to link such cups to the chains themselves, for instance one row on either side of such a chain.

To enable unhindered pivotal motion, an intermediate space 4 is left clear between the cup halves 1a, 1b, while the short upstanding edges of the cup halves are rounded off.

On the upstream side of holder 2 - 'upstream' being the direction from which the cup proceeds - there is an upstanding rear face 7. In general, the lower edge thereof constitutes one of the bottom edges 2a. Mounted on the upstanding side edges of the rear face 7 are operating means, more particularly biasing means 3, in the form of leaf springs, which press against the sides of the cup halves 1a, 1b. As soon as the cup halves are released from their locked position, these pushing leaf springs will impart an initial rotary speed to them so that, in turn, the products P, when being delivered, are given a downward initial speed v > 0 m/s.

The locking of each cup half 1a, 1b in a locked position is effected with locking means 10 adjacent the upstanding rear surface 7 of the holder 1. More particularly, the locking means 10 for each cup half 1a, 1b comprise a lug with a lip 12a, 12b, snapped by a rod-shaped pawl 11extending parallel to the long side of the bottom edge 2a in a generally horizontal direction, the pawl being connected, perpendicularly thereto, with a material strip 13 which largely forms one whole with, and is resiliently connected to, the back of the upstanding surface 7. The lip 12a, 12b forms a projection which extends beyond the upstanding rear surface 7 and is snapped clampingly over the rod-shaped pawl 11. From under the pawl 11, the strip extends further in line with the material strip 13 as far as a release end 14 which upon a small displacement in upstream direction, for instance upon its being pushed by a release element arranged adjacent a discharge path, removes the clamped or snapped condition and thereby releases the cup halves 1a, 1b and allows pivoting of the cup halves.

Such release elements are generally fixedly arranged at, or fitted to, the frame of the conveyor adjacent the discharge paths. These form, for instance, a unit of juxtaposed release elements for the rows passing along side by side, these release elements being adapted to assume a retracted and an extended position, for instance a pawl operated pneumatically, electromagnetically, or mechanically. Control of this is generally effected by a computer which, in accordance with the selection and sorting criteria, is to energize a release element at the proper time to thereby deliver a product onto the proper discharge path.

It will be clear to those skilled in the art that through the combined bias, lock, and release, with the release taking place in a very short time, the delivery of the products requires correspondingly little time and little space in the transport direction. Moreover, such a delivery apparatus can also be applied to other apparatuses than the conveyor described here.

Furthermore, hereinabove, a rectangular configuration for the cup and cup halves has been described, but other shapes are quite possible as well. These, as well as other, variants and modifications of further parts of the above-described invention should be understood to fall within the scope of the present invention. Especially where the method is concerned, it has been found to be of major advantage to impart an initial velocity in downward direction and to realize this in any suitable manner, for instance with a pneumatic or electromagnetic operation of delivery elements. Specifically in this field of the art, in future higher processing rates will be required.

## Claims

1. An apparatus for sorting products such as fruits, comprising an endless conveyor with product carriers which are connected to the conveyor with the aid of holders and which are positioned at predetermined intermediate distances along the conveyor, for conveying the products in a transport direction, wherein the product carriers can assume two positions, viz. a conveying position for conveying the products to discharge paths, and a delivery position for delivering products at a desired discharge path, as well as operating means for operation of the product carriers for switching from conveying position to delivery position, and vice versa,
**characterized in that** the operating means at said operation impart to the products a downward initial velocity in a substantially vertical plane through said transport direction.

2. An apparatus according to claim 1, **characterized in that** the operating means comprise biasing means, locking means, and release means.

3. An apparatus according to claim 1, **characterized in that** the product carriers are cups in the form of a substantially rectangular tray, each cup consisting of two cup halves, separated from each other by some intermediate space halfway the long side of said rectangle, each cup half being freely pivotable about a corresponding pivot pin situated in the transport direction along the short side of the bottom of the rectangle.

4. An apparatus according to claims 2 and 3, **characterized in that** for each cup half, a biasing means is arranged on a short side of said rectangle.

5. An apparatus according to claim 4, **characterized in that**
the biasing means consists of a leaf spring.

6. An apparatus according to claims 2 and 5, **characterized in that** the holders consist of
- a bottom edge having the shape of said rectangle, enclosing a pair of cup halves, with pivot holes adjacent the ends of the short sides of the rectangle, and
- an upstanding surface along the long upstream side of the bottom edge,
wherein each of the leaf springs extends from an upstanding edge of the upstanding surface and in the conveying position presses against a wall of the cup half on the short side of the rectangle, and wherein the cup halves are locked in the conveying position with the locking means adjacent the upstanding surface.

7. An apparatus according to claim 6, **characterized in that**
the locking means comprise for each cup half,
- a pawl connected with the holder, and
- a lug connected with such cup half.

8. An apparatus according to claim 7, **characterized in that**
the lug comprises a lip which is connected with the bottom of a cup half on the side situated remote from the short side of said rectangle and extends just beyond said upstanding surface, and
the pawl comprises a rod, parallel to the long side of the bottom edge and substantially horizontal, which with the aid of a material strip, perpendicular thereto and generally vertical, is resiliently connected with the upstream rear side of said upstanding surface,
wherein the lips of the cup halves clamp onto the rod and are snapped thereby, and wherein the vertical material strip extends downwards along a release end to below the bottom edge, which release end, upon displacement in upstream direction by means of release elements, releases the lips and thereby unlocks the cup halves.

9. An apparatus according to claim 8, **characterized in that** the release elements are arranged adjacent the discharge paths.

10. An apparatus for delivering products, for instance during transport by a conveyor along discharge paths, wherein the products are conveyed with the aid of product carriers, which are composed of parts which are locked, while held together, by locking means to thereby prevent premature delivery by falling, and which, at delivery, are unlocked by release elements adjacent the discharge paths,
**characterized in that** the locking means constitute a mechanical switch of a short, virtually instantaneous, switching time, and the apparatus further comprises biasing means which, at delivery, impart to said parts, and hence to the products, an initial velocity v > 0 m/s substantially in the fall direction.

11. A method for sorting products such as fruits, comprising:
- conveying classified products with an endless conveyor in a transport direction, and
- in accordance with the classification, delivering the products at discharge locations intended for that purpose, for instance discharge paths,
**characterized in that**
at delivery, there is imparted to the products a downward initial velocity in a substantially vertical plane through said transport direction.
